# FASCICULE DE BREVET EUROPEEN

(11) **EP 3 827 159 B1**
(45) Date de publication et mention de la délivrance du brevet: **05.04.2023**
(21) Numéro de dépôt: 19790634.0
(22) Date de dépôt: 24.07.2019
(51) Int. Cl.: F01D 5/28, F01D 5/14, F04D 29/02, F04D 29/32

(54) **AUBE DE TURBOMACHINE COMPORTANT UN RENFORT STRUCTUREL A ADHERENCE RENFORCEE**
TURBOMASCHINENSCHAUFEL MIT EINEM SCHUTZMANTEL MIT VERBESSERTER HAFTFESTIGKEIT
TURBOMACHINE BLADE COMPRISING A SHEATH HAVING AN IMPROVED ADHERENCE

(30) Priorité: 24.07.2018 FR 1856858
(43) Date de publication de la demande: 02.06.2021
(73) Titulaire: SAFRAN AIRCRAFT ENGINES, 75015 Paris (FR)
(72) Inventeur: JOUDON, Vincent, 77550 MOISSY-CRAMAYEL (FR); VARIN, Franck, Bernard, Léon, 77550 MOISSY-CRAMAYEL (FR)
(74) Mandataire: Cabinet Beau de Loménie
(86) Numéro de dépôt international: PCT/FR2019/051836
(87) Numéro de publication internationale: WO 2020/021199

(56) Documents cités:
- EP-A1- 2 033 772
- FR-A1- 2 921 099
- FR-A1- 2 943 102
- US-A- 4 895 491
- US-A1- 2010 054 945

## Description

### Arrière-plan de l'invention

Le domaine de l'invention est celui des turbomachines et plus particulièrement celui des aubes de soufflantes en matériau composite à matrice organique renforcée par des fibres dont le bord d'attaque comporte un renfort structurel métallique et la présente invention concerne plus particulièrement un procédé de fixation de ce renfort structurel métallique sur la pale en matériau composite de l'aube.

On rappelle que le bord d'attaque correspond à la partie antérieure d'un profil aérodynamique qui fait face au flux d'air et qui divise l'écoulement d'air en un écoulement d'air d'intrados et en un écoulement d'air extrados. Par opposition, le bord de fuite correspond à la partie postérieure d'un profil aérodynamique où se rejoignent les écoulements intrados et extrados.

Les aubes de turbomachine, et notamment les aubes de soufflante, subissent d'importantes contraintes, notamment mécaniques. Aussi, il est connu d'équiper les aubes de soufflante réalisées en matériau composite, d'un renfort structurel métallique s'étendant sur toute la hauteur du profil aérodynamique et épousant la forme du bord d'attaque, comme mentionné dans la demande EP1908919 déposée au nom de la demanderesse. Un tel renfort structurel métallique permet de protéger l'aube en matériau composite lors d'un impact d'un corps étranger sur la soufflante, tel que par exemple un oiseau, de la grêle ou bien encore des cailloux en phase de décollage ou d'atterrissage.

De façon classique, le renfort structurel métallique est une pièce métallique en alliage de titane réalisée à partir d'une préforme obtenue depuis un simple barreau métallique et d'une succession d'étapes de forge, comme décrit notamment dans la demande FR2961866 également déposée au nom de la demanderesse, et ensuite collée sur le bord d'attaque de l'aube de soufflante à l'aide d'un joint de colle époxy dont les propriétés à 23°C sont les suivantes : Module de Young 1 GPa < E < 5 GPa ; contrainte à rupture σᵣ > 10 MPa ; déformation à rupture εᵣ < 10%. Des autres aubes similaires de turbomachines sont aussi connues de EP 2 033 772 A1 et de FR 2 921 099 A1.

Toutefois, ces impacts correspondent à des chargements mécaniques sur l'aube et génèrent, par effets de bords, des concentrations de contraintes dans la colle située sous les extrémités du renfort structurel métallique qui facilitent l'initiation de décollements qui vont ensuite se propager plus largement sous le renfort structurel métallique. Ces décollements peuvent aussi continuer à se propager lors d'autres impacts ou sous chargement de fatigue vibratoire provoquant des risques de délaminage, de rupture de fibre ou encore d'endommagement par décohésion fibre/matrice.

L'aube de soufflante ainsi endommagée doit alors être réparée voire remplacée lors d'une opération de maintenance, ce qui impact fortement la disponibilité de l'aéronef intégrant la turbomachine concernée.

### Objet et résumé de l'invention

Dans ce contexte, l'invention vise à pallier les inconvénients précités des renforts structurels collés actuels en proposant une aube de turbomachine comportant un renfort structurel métallique dont les décollements aux extrémités sont considérablement réduits lors d'un impact d'un corps étranger sur la soufflante.

Ce but est atteint selon la revendication 1 grâce à une aube de turbomachine comportant une surface aérodynamique s'étendant selon une première direction entre un bord d'attaque et un bord de fuite et selon une deuxième direction, sensiblement perpendiculaire à ladite première direction, entre un pied de l'aube et un sommet de l'aube, ladite surface aérodynamique étant réalisée en un matériau composite à matrice organique renforcée par des fibres, et un renfort structurel métallique collé par un joint de colle sur ledit bord d'attaque dont il épouse la forme et présentant sur toute sa hauteur, définie essentiellement selon ladite deuxième direction, une section sensiblement en forme de

V avec une base prolongée de deux flancs latéraux présentant un profil aminci au niveau d'extrémités libres dirigées vers ledit bord de fuite, caractérisée en ce que ledit joint de colle est complété localement sous lesdites extrémités libres desdits flancs latéraux par un polymère élastomérique introduit sous forme de particules solides dans ledit joint de colle et adhérisé à ladite surface aérodynamique et/ou lesdites extrémités libres desdits flancs latéraux pendant une phase de polymérisation.

Ainsi, l'adjonction d'un polymère élastomérique, en assouplissant la liaison collée aux extrémités du renfort permet d'éviter les décollements liés aux liaisons rigides présentes dans les solutions de l'art antérieur.

Avantageusement, ledit polymère élastomérique comporte à 23°C les propriétés suivantes : Module de Young E ≈ 10 MPa ; contrainte à rupture σᵣ > 10 MPa ; déformation à rupture εᵣ > 80%.

De préférence, ledit polymère élastomérique est présent sur une longueur comprise entre 0% et 25% d'une longueur totale à partir de chacune desdites extrémités libres de chacun desdits flancs latéraux.

Selon le mode de réalisation considéré, qui n'est pas couverte par la portée des revendications, ledit polymère élastomérique peut être adhérisé à la fois à ladite surface aérodynamique et auxdites extrémités libres de flancs latéraux, remplaçant ledit joint de colle, ou être introduit sous forme de particules dans ledit joint de colle.

L'invention concerne également toute turbomachine comportant au moins une telle aube.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif et sur lesquels :
- la figure 1 représente une aube de soufflante de turbomachine en vue latérale ;
- la figure 2 illustre une section partielle de l'aube de la figure 1 montrant un renfort structurel métallique du bord d'attaque collé sur l'aube en matériau composite conformément à l'invention ; et
- les figures 3, 4A, 4B, 4C et 5 montrent plusieurs exemples de réalisation distincts de la structure d'assemblage du polymère élastomérique reliant l'aube au renfort structurel métallique.

### Description détaillée d'un mode de réalisation

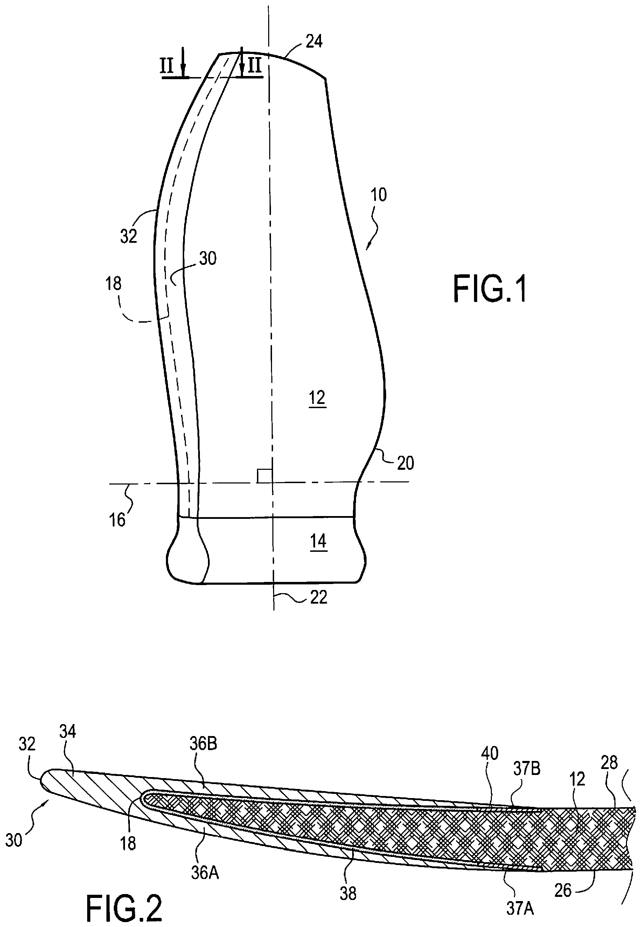

La figure 1 est une vue latérale d'une aube, par exemple une aube de soufflante d'une turbomachine (non représentée), comportant un renfort structurel métallique de bord d'attaque selon l'invention.

L'aube 10 comporte une surface aérodynamique ou pale 12 solidaire d'un pied 14 et s'étendant selon une première direction axiale 16 entre un bord d'attaque 18 et un bord de fuite 20 et selon une deuxième direction radiale 22 sensiblement perpendiculaire à la première direction 16 entre ce pied 14 et un sommet de l'aube 24. Les faces latérales de la pale 12 qui relient le bord d'attaque 18 au bord de fuite 20 constituent les faces extrados 26 et intrados 28 de l'aube.

Classiquement, la pale 12 est réalisée en un matériau composite à matrice organique renforcée par des fibres. A titre d'exemple, le matériau composite utilisé peut être composé par un assemblage de fibres tissées de carbone et d'une matrice de résine époxyde, l'ensemble étant formé par moulage au moyen d'un procédé d'injection de résine de type RTM (pour "Resin Transfer Molding").

L'aube 10 comporte également un renfort structurel 30 collé au niveau du bord d'attaque 18 de la pale et qui s'étend à la fois selon la première direction 16 au-delà de ce bord d'attaque et selon la deuxième direction 22 entre le pied 14 et le sommet 24 de l'aube.

Comme représenté à la figure 2, le renfort structurel 30 épouse la forme du bord d'attaque 18 de la pale 12 de l'aube 10 qu'il prolonge pour former le bord d'attaque de l'aube 32. De façon classique, ce renfort structurel 30 est avantageusement une pièce monobloc comportant une section sensiblement en forme de V présentant une base ou nez 34 dont le profil externe forme le bord d'attaque de l'aube 32 et le profil interne arrondi est apte à épouser la forme arrondie du bord d'attaque 18 de la pale 12. Cette base est prolongée par deux flancs latéraux ou ailettes 36A et 36B épousant l'intrados 26 et l'extrados 28 de l'aube et présentant un profil effilé ou aminci au niveau d'extrémités libres 37A, 37B dirigées vers le bord de fuite de l'aube. Le renfort structurel 30 est métallique et préférentiellement à base titane de type TA6V. Ce matériau présente en effet une grande capacité d'absorption de l'énergie due aux chocs.

Comme le montre aussi cette figure 2, le renfort structurel 30 est collé sur la pale 12 au moyen d'un joint de colle 38 de propriétés connues et rappelées en préambule de la présente demande, lequel joint de colle est, selon l'invention, complété localement sous les extrémités libres 37A, 37B des ailettes 36A, 36B d'un polymère élastomérique 40 adhérisé à la pale et/ou à ces extrémités libres pendant une phase de polymérisation et dont les propriétés à 23°C sont les suivantes : Module de Young E ≈ 10 MPa ; contrainte à rupture σᵣ > 10 MPa ; déformation à rupture εᵣ > 80%. Un exemple d'un tel polymère élastomérique est connu sous la référence 23HP90 de la société ITC.

Ce complément d'adhérisation peut être obtenu à ces extrémités libres en remplacement total du joint de colle ou en supplément de ce joint. En l'absence d'un joint de colle, la surface du renfort ou celle du composite est dégraissée et sablée avant de recevoir un primaire d'adhérisation. L'élastomère est alors adhérisé à la surface lors de sa vulcanisation (ou polymérisation) dans un outillage spécifique connu en soi, par exemple à une température de 180°C sous une pression de 3 bars et pendant 60 minutes. En présence d'un joint de colle, on peut recourir au même processus de polymérisation pour permettre d'adhériser l'ensemble des éléments (renfort, composite, élastomère et joint de colle) entre eux. Il est également envisageable de polymériser l'élastomère sur le renfort ou sur le composite puis de placer le renfort sur le composite en intercalant le joint de colle et ensuite de polymériser l'ensemble ainsi formé.

Le polymère élastomérique peut être présent sur une longueur comprise entre 0% et 25% de la longueur totale d'ailette à partir de son extrémité libre, l'homme du métier sachant l'adapter selon la criticité de la zone située à une hauteur donnée de l'aube. Cela permet d'avoir un joint de colle avec des propriétés mécaniques optimisées par zone selon le besoin, à l'image de ce qui est réalisé avec les matériaux composites classiques. En effet, les polymères élastomériques possédant généralement une rigidité faible, l'intensité et la singularité des contraintes induites par effets de bords dans le polymère élastomérique sont considérablement réduites par rapport à une colle époxy classique. De plus, les polymères élastomériques présentent des déformations à rupture très importantes ainsi que des contraintes à rupture qui augmentent avec la vitesse d'impact. L'ajout d'un polymère élastomérique en extrémité d'ailette assure donc la double fonction i) d'atténuer les contraintes générées dans cette zone critique et ii) de dissiper l'énergie mécanique de l'impact sans s'endommager.

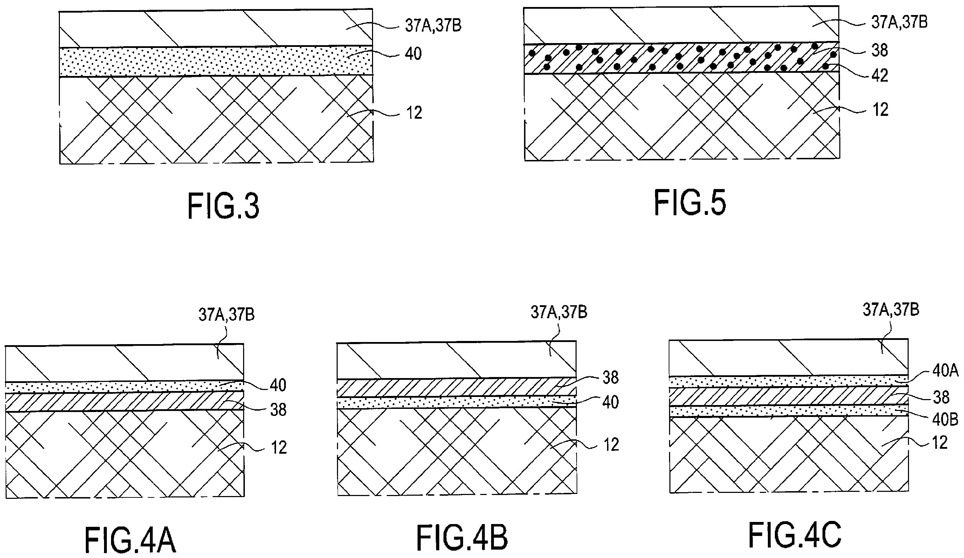

La figure 3 illustre, sur un détail de la structure d'assemblage, le polymère élastomérique 40 adhérisé par polymérisation à la pale 12 et aux extrémités d'ailettes 37A, 37B et remplaçant à cet endroit (c'est-à-dire localement) le joint de colle entre cette pale et ces extrémités de l'ailette.

La figure 4A illustre, sur un détail de la structure d'assemblage, le polymère élastomérique 40 formant une couche homogène, appliqué par exemple par projection de particules en fusion sur l'extrémité de l'ailette 37A, 37B, avant application du joint de colle 38 entre cette couche et la pale 12. Sur la figure 4B, il est envisagé que cette couche soit appliquée sur la pale 12 et non à l'extrémité des ailettes et sur la figure 4C qu'elle le soit à la fois sur la pale 12 et les extrémités des ailettes 37A, 37B, un joint de colle intercalaire 38 assurant alors la liaison entre ces deux couches de polymère élastomérique 40A, 40B.

Enfin, la figure 5 illustre, sur un détail de la structure d'assemblage, le polymère élastomérique introduit sous forme de particules solides 42 dans la colle 38. Dans ce cas, les particules solides sont préalablement saupoudrées sur la colle crue et se dispersent dans l'épaisseur du joint de colle pendant la phase de polymérisation qui implique une baisse de la viscosité et le fluage de la colle.

Si la description précitée a été illustrée par une aube de soufflante de turbomachine, il conviendra de noter que l'invention est également applicable à la réalisation d'un renfort structurel métallique destiné à renforcer un bord d'attaque de tout autre type d'aube de turbomachine, terrestre ou aéronautique, et notamment un turbomoteur d'hélicoptère ou un turboréacteur d'avion mais également d'hélices telles que des hélices de double soufflantes contra rotatives non carénées.

## Revendications

1. Aube de turbomachine comportant une surface aérodynamique (12) s'étendant selon une première direction (16) entre un bord d'attaque (18) et un bord de fuite (20) et selon une deuxième direction (22), sensiblement perpendiculaire à ladite première direction, entre un pied de l'aube (14) et un sommet de l'aube (24), ladite surface aérodynamique étant réalisée en un matériau composite à matrice organique renforcée par des fibres, l'aube comportant en outre un renfort structurel métallique (30) collé par un joint de colle (38) sur ledit bord d'attaque dont il épouse la forme et présentant sur toute sa hauteur , définie essentiellement selon ladite deuxième direction, une section sensiblement en forme de V avec une base (34) prolongée de deux flancs latéraux (36A, 36B) présentant un profil aminci au niveau d'extrémités libres (37A, 37B) dirigées vers ledit bord de fuite, **caractérisée en ce que** ledit joint de colle est complété localement sous lesdites extrémités libres desdits flancs latéraux par un polymère élastomérique (40) introduit sous forme de particules solides (42) dans ledit joint de colle et adhérisé à ladite surface aérodynamique et/ou lesdites extrémités libres desdits flancs latéraux pendant une phase de polymérisation.

2. Aube selon la revendication 1, **caractérisée en ce que** ledit polymère élastomérique comporte à 23°C les propriétés suivantes : Module de Young E ≈ 10 MPa ; contrainte à rupture σᵣ > 10 MPa ; déformation à rupture εᵣ > 80%.

3. Aube selon la revendication 1 ou la revendication 2, **caractérisée en ce que** ledit polymère élastomérique est présent sur une longueur comprise entre 0% et 25% d'une longueur totale à partir de chacune desdites extrémités libres de chacun desdits flancs latéraux.

4. Aube selon l'une quelconque des revendications 1 à 3, **caractérisée en ce que** ledit renfort structurel est un métal à base titane de type TA6V.

5. Aube selon l'une quelconque des revendications 1 à 4, constituant une aube de soufflante de turbomachine.

6. Turbomachine comportant au moins une aube selon la revendication 5.

## Patentansprüche

1. Turbomaschinenschaufel, die eine aerodynamische Oberfläche (12) aufweist, die sich in einer ersten Richtung (16) zwischen einer Vorderkante (18) und einer Hinterkante (20) und in einer zweiten Richtung (22), die etwa senkrecht zur ersten Richtung zwischen einem Schaufelfuß (14) und einer Schaufelspitze (24) erstreckt, wobei die aerodynamische Oberfläche aus einem Verbundmaterial mit faserverstärkter organischer Matrix hergestellt ist, wobei die Schaufel ferner eine metallische Strukturverstärkung (30) aufweist, die mittels einer Klebenaht (38) an der Vorderkante verklebt ist, deren Form sie annimmt und über ihre gesamte Höhe, die im Wesentlichen in der zweiten Richtung definiert ist, einen etwa V-förmigen Querschnitt mit einer an zwei Seitenflanken (36A, 36B) verlängerten Basis (34) aufweist, die im Bereich freier Ende (37A, 37B), die zur Hinterkante gerichtet sind, ein verschlanktes Profil aufweisen, **dadurch gekennzeichnet, dass** die Klebenaht lokal unter den freien Enden der Seitenflanken durch ein Elastomerpolymer (40) vervollständigt ist, das in Form fester Partikel (42) in die Klebenaht eingeführt und mit der aerodynamischen Oberfläche und/oder den freien Enden der Seitenflanken während einer Polymerisierungsphase verhaftet wird.

2. Schaufel nach Anspruch 1, **dadurch gekennzeichnet, dass** das Elastomerpolymer bei 23°C die folgenden Eigenschaften aufweist: Young-Modul E ≈ 10 MPa; Bruchspannung σᵣ > 10 MPa; Bruchverformung εᵣ > 80%.

3. Schaufel nach Anspruch 1 oder Anspruch 2, **dadurch gekennzeichnet, dass** das Elastomerpolymer auf einer Länge vorhanden ist, die zwischen 0% und 25% einer Gesamtlänge ausgehend von jedem der freien Enden von jeder der Seitenflanken liegt.

4. Schaufel nach einem der Ansprüche 1 bis 3, **dadurch gekennzeichnet, dass** die Strukturverstärkung ein Metall auf der Basis von Titan vom Typ TA6V ist.

5. Schaufel nach einem der Ansprüche 1 bis 4, die eine Gebläseschaufel einer Turbomaschine bildet.

6. Turbomaschine, die mindestens eine Schaufel nach Anspruch 5 aufweist.

## Claims

1. Turbine engine blade comprising an aerodynamic surface (12) extending in a first direction (16) between a leading edge (18) and a trailing edge (20) and in a second direction (22), substantially perpendicular to said first direction, between a blade root (14) and a blade tip (24), said aerodynamic surface being made of a fiber-reinforced organic matrix composite material, the blade further comprising a metallic structural reinforcement (30) bonded by an adhesive joint (38) to said leading edge whose shape it follows and having over its entire height, essentially defined along said second direction, a substantially V-shaped section with a base (34) extended by two lateral flanks (36A, 36B) having a thinned profile at free ends (37A, 37B) directed toward said trailing edge, **characterized in that** said adhesive joint is locally supplemented under said free ends of said lateral flanks by an elastomeric polymer (40) introduced in the form of solid particles (42) into said adhesive joint and adhered to said aerodynamic surface and/or said free ends of said lateral flanks during a polymerization phase.

2. Blade as claimed in claim 1, **characterized in that** said elastomeric polymer has the following properties at 23°C: Young's modulus E ≈ 10 MPa; stress at break σᵣ > 10 MPa; strain at break εᵣ > 80%.

3. Blade as claimed in claim 1 or claim 2, **characterized in that** said elastomeric polymer is present over a length comprised between 0% and 25% of a total length from each of said free ends of each of said lateral flanks.

4. Blade as claimed in any one of claims 1 to 3, **characterized in that** said structural reinforcement is a titanium-based metal of TA6V type.

5. Blade as claimed in any one of claims 1 to 4, constituting a turbine engine fan blade.

6. Turbine engine comprising at least a blade according to claim 5.
